# EUROPEAN PATENT APPLICATION

(11) **EP 1 480 409 A2**
(43) Date of publication of application: **24.11.2004**
(21) Application number: 04005059.3
(22) Date of filing: 04.03.2004
(51) Int. Cl.: H04L 29/06, H04M 7/00, H04N 5/76, H04N 5/445

(54) **Digital video recorder having an internet phone and communication method thereof**

(30) Priority: 17.03.2003 KR 2003016390
(71) Applicant: Sungjin C&C Co.,LTD., Seoul, 153-802 (KR)
(72) Inventor: Lim, Byeong-Jin, Seocho-ku, Seoul 137-049 (KR); Lim, In-Keon, Seocho-ku, Seoul 137-049 (KR)
(74) Representative: Eisenführ, Speiser & Partner

(57) **Abstract**

Provided is an emergency voice communication technique through the Internet using a VoIP (Voice over Internet Protocol) Internet phone between a central control center and a digital video recorder or between digital video recorders remotely separated from each other in the case of the generation of an alarm event. The operator of the digital video recorder immediately calls the Internet phone of a predetermined remote workstation only by lifting the handset of the Internet phone connected to the digital video recorder when an alarm event is generated in the digital video recorder. In the case that an alarm event occurs in the remote workstation, the operator of the remote workstation immediately calls the Internet phone of the digital video recorder by lifting the handset of the Internet phone connected to the remote workstation. Furthermore, VoIP communication between digital video recorders that are remotely separated from each other and connected to each other can be carried out through a network or the Internet using Internet phones connected to the digital video recorders.

## Description

### FIELD OF THE INVENTION

The present invention relates to a digital video recorder (DVR). Specifically, the invention relates to an emergency voice communication technique through the Internet using a VoIP (Voice over Internet Protocol) Internet phone between a central control center and a digital video recorder or between digital video recorders remotely separated from each other in the case of the generation of an alarm event.

### BACKGROUND OF THE RELATED ART

A video recording system for security purpose is used in a public institution, a financial institution window and places requiring security. The video recording system records video data captured by a plurality of video cameras installed in the places and monitors the video data.

Especially, a digital video recorder (DVR) that can effectively store video data and, if required, reproduce images with high picture quality is increasingly used. The digital video recorder converts an analog video signal captured by a video camera to digital video data and performs MPEG compression and decompression for the digital video data so as to efficiently record and reproduce a large quantity of video data.

The digital video recorder can record images at a high speed in the case that monitoring sensors or an alarming device are set in the digital video recorder together with video cameras and a predetermined video camera is operated depending on a specific sensor in an emergency situation.

The conventional video recorder detects or monitors a situation such as exit and entrance or burglary through a sensor and, in the case of emergency, raises an alarm or informs the central control center (remote workstation) of the emergency via a network. At this time, the video camera operating in connection with the sensor can be converted into a fast recording mode to record images. That is, the number of frames per second can be increased.

In the case of emergency, however, the central control center should call the manager of a corresponding local digital video recorder using a general telephone through a general telephone network.

Furthermore, it takes time to search for the telephone number of a corresponding site and dial the number when the central control center calls the site after detection of the emergency alarm. Accordingly, even the case that the emergency situation is ended when the central control center is connected with the site frequently occurs.

### SUMMARY OF THE INVENTION

An object of the present invention is to provide a digital video recorder including an efficient voice communication system capable of carrying out emergency voice communication in real time between the digital video recorder and a remote workstation that is connectable with the digital video recorder through a network or the Internet when an emergency alarm is generated.

Another object of the present invention is to provide a digital video recorder having a VoIP system capable of executing voice communication among a plurality of digital video recorders that are remotely separated from one another and connectable through a network or the Internet without using a general telephone.

To accomplish the objects of the present invention, there is provided a digital video recorder having an Internet phone, which is used for voice communication among a plurality of digital video recorders that are remotely separated from one another and connected through a network or the Internet or between the digital video recorder and a remote workstation.

The digital video recorder or remote workstation has Windows or Linux operating system installed therein. An Internet phone is connected to a USB port of the digital video recorder or remote workstation. A speaker and a microphone of the Internet phone are interfaced with the digital video recorder or remote workstation through a USB sound card of Windows or Linux system such that audio signals are transmitted through VoIP.

Operations of pushing keypad buttons and lifting the handset of the Internet phone are interfaced to the digital video recorder through an application interface. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

In the drawings:
FIG.1 roughly shows the construction of a digital video recorder system according to the present invention.
FIG.2 is a flow chart of a voice communication procedure of the digital video recorder according to a preferred embodiment of the present invention.
FIG.3 is a flow chart of a voice communication procedure executed between digital video recorders according to a preferred embodiment of the present invention.
FIG.4 shows the construction of an Internet phone set in the digital video recorder according to the present invention.

### DETAILED DESCRIPTION OF THE INVENTION

Reference will now be made in detail to the preferred embodiments of the present invention, examples of which are illustrated in the accompanying drawings.

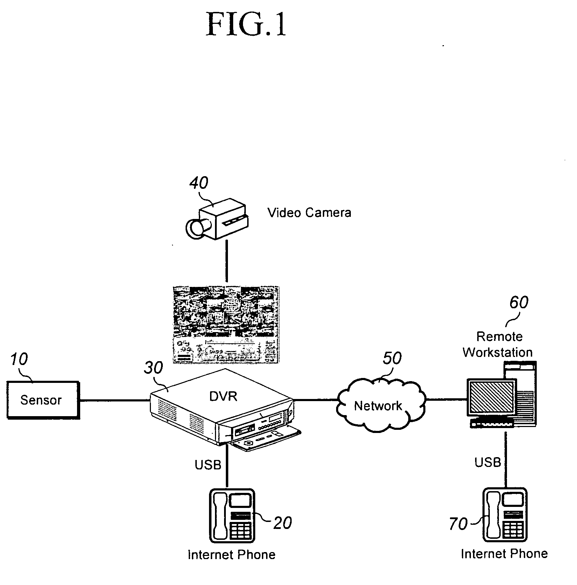

A digital video recorder system providing VoIP service according to the present invention is explained in detail with reference to FIGS.1, 2, 3 and 4.

The present invention connects an Internet phone with a USB port of a PC-based digital video recorder to enable VoIP communication between the digital video recorder and a remote workstation as well as between digital video recorders located separated from each other.

The present invention is applied to a PC-based digital video recorder. In the case that the operating system of the PC-based digital video recorder is Microsoft Windows or Linux operating system, a plurality of digital video recorders can carry out VoIP communication among them through Internet phones connected to their USB ports.

FIG.1 roughly shows the construction of the digital video system according to the present invention. Referring to FIG. 1, when a sensor 10 connected to the digital video recorder 30 senses an abnormal state, the sensor 10 alarms the digital video recorder.

Then, a video camera 40 operating in connection with the sensor 10 activates its recording operation or, when it is recording, temporarily increases the recording speed.

For example, the video camera 40 operating in connection with the alarm sensor 10 records images at relatively low recording speed of approximately 1-8 frames per second ordinarily. When an alarm is raised, the video camera can record images at the maximum speed of approximately 30 frames per second.

At this time, the local digital video recorder 30 notifies a remote workstation 60 connected thereto through a network 50 of event information about the alarm. Here, the workstation can be considered as a central control center.

That is, the images recorded at a high speed by the video camera 40 operating in connection with the sensor 10 are automatically transmitted to the remote workstation 60 together with the alarm event, to be displayed on a screen of the remote workstation 60.

At this time, since software program operating in the remote workstation knows identification information of the local digital video recorder 30 that sends the emergency notification, the dial tone of an Internet phone 20 of the digital video recorder 30 is sounded as soon as the operator of the remote workstation lifts the handset of an Internet phone 70 connected to the remote workstation 60.

That is, the present invention enables voice communication between the digital video recorder and remote workstation without delay because Windows or Linux program installed in the PC-based digital video recorder 30 supports VoIP, distinguished from the prior art in which the operator of the remote workstation of the central control center becomes aware of an emergency and then pushes dial numbers of a key pad to call a site where a corresponding digital video recorder is installed.

In a preferred embodiment of the present invention, the digital video recorder system of the present invention can be constructed in such a manner that the operator of the digital video recorder 30 lifts the handset of the Internet phone 20 to call the IP address of the remote workstation without inputting a separate address when an alarm event is generated at the digital video recorder side.

Since the program of the remote workstation previously know the IP address of the local digital video recorder 30 that transmits the alarm event, the operator of the remote workstation can directly call the Internet phone 20 of the digital video recorder 30 60 by lifting the handset of the Internet phone 70.

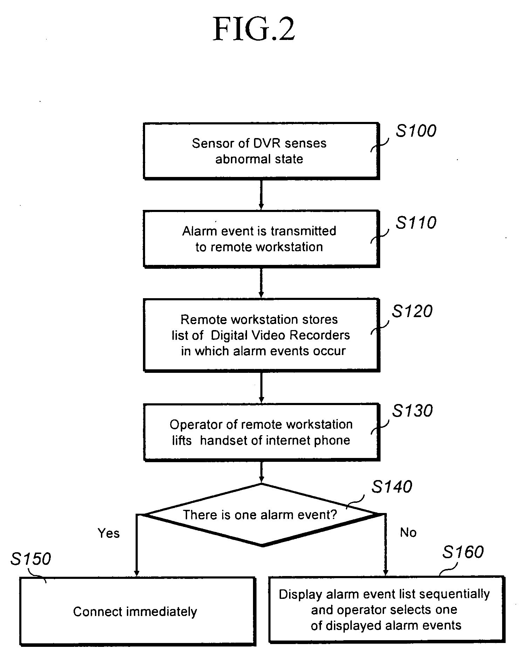

FIG.2 is a flow chart of a voice communication procedure of the digital video recorder according to a preferred embodiment of the present invention. Referring to FIG.2, at step S100, when the sensor 10 of the digital video recorder 30 senses an abnormal state, an alarm is raised and the video camera operating in connection with the sensor performs a predetermined operation.

At step S110, the digital video recorder 30 notifies the remote workstation 60 of the alarm event through the network 50.

Then, the remote workstation 60 stores a list of digital video recorders that currently send alarm event notification at step S120. At step S130, the operator of the remote workstation who recognizes the alarm event lifts the handset of the Internet phone connected to the remote workstation through the USB port thereof to connect with the operator of a corresponding digital video recorder.

The operation of lifting the handset is transmitted to the corresponding digital video recorder as a signal through the USB port of the remote workstation so that a predetermined program installed in the digital video recorder can detect it.

In the case that the remote workstation is notified of only one alarm event, the remote workstation 60 automatically calls the Internet phone 20 of the corresponding digital video recorder 30 as soon as its operator lifts the handset of the Internet phone 79 connected to the remote workstation at step S150.

When the remote workstation is notified of more than two alarm events, the alarm events are sequentially displayed on the monitor of the remote workstation and the operator of the remote workstation selects one of them using a mouse or a keyboard so as to automatically call the Internet phone connected to the corresponding digital video recorder at step S160.

At this time, the present invention can rapidly call the corresponding digital video recorder by only selecting one of digital video recorders displayed on the monitor of the remote workstation, distinguished from the prior art in which the control center pushes key buttons one by one to make a phone call.

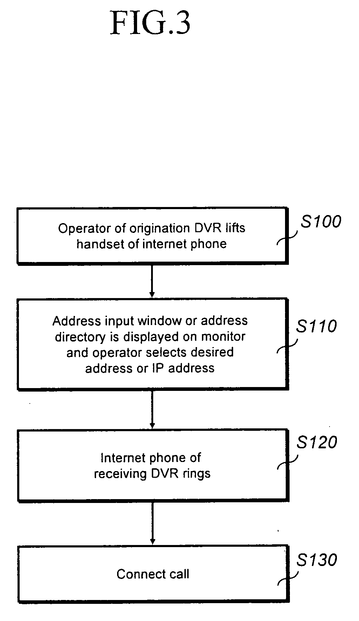

FIG.3 is a flow chart of a voice communication procedure carried out between digital video recorders remotely separated from each other. Referring to FIG.3, when the operator of an originating source digital video recorder lifts the handset of the Internet phone connected to the digital video recorder at step S200, an IP address input window or a directory of the addresses of digital video recorders to which the originating digital video recorder can be connected via a network or the internet is displayed on the monitor of the originating digital video recorder at step 210.

Here, the operator of the originating digital video recorder can select a desired digital video recorder or directly input the IP address of the digital video recorder. Then, the Internet phone of the selected digital video recorder rings at step 220. At step 230, the operator of the selected digital video recorder lifts the handset of the Internet phone connected thereto so as to communicate with the originating digital video recorder by telephone.

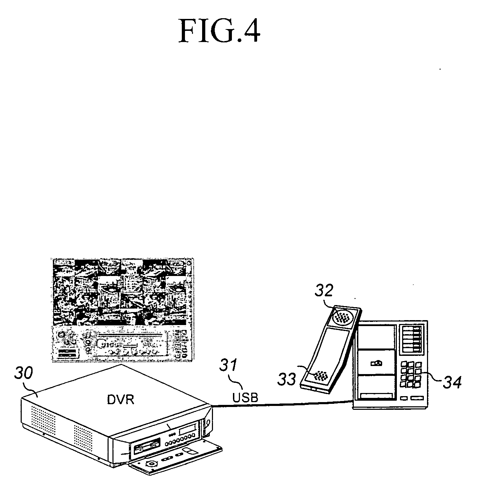

FIG.4 shows the construction of the Internet phone set in the digital video recorder system according to the present invention. Referring to FIG.4, the Internet phone of the present invention includes a keypad 34, a microphone 32 and a speaker 33.

The Internet phone is connected to the USB port of the digital video recorder 30. A USB sound card interface that interfaces the microphone 32 to the speaker 33 is provided by Microsoft Windows operating system or Linux operating system.

An application interface (API) of a device driver provided by the Internet phone manufacturer is used for interfacing the operation of lifting the handset, operation of pushing key pad buttons and so on to the digital video recorder.

To execute voice communication using the Internet phone connected to the digital video recorder, audio input/output data can be transmitted via VoIP on a network or the Internet using H.323 and G.723.1 standard protocol. Here, the VoIP service can be easily provided using NetMeeting RDK provided by Microsoft or H.232 source code provided by Linux.

According to the present invention, the operator of the digital video recorder can immediately call the Internet phone of a predetermined remote workstation only by lifting the handset of the Internet phone connected to the digital video recorder when an alarm event is generated in the digital video recorder.

Furthermore, in the case that an alarm event occurs in the remote workstation, the operator of the remote workstation can immediately call the Internet phone of the digital video recorder by lifting the handset of the Internet phone connected to the remote workstation.

Moreover, the present invention enables VoIP communication between digital video recorders that are remotely separated from each other and connected to each other through a network or the Internet using Internet phones connected to the digital video recorders.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A digital video recorder having an Internet phone, which is used for voice communication among a plurality of digital video recorders that are remotely separated from one another and connected through a network or the Internet or between the digital video recorder and a remote workstation,
wherein the digital video recorder or remote workstation has Windows or Linux operating system installed therein, an internet phone is connected to a USB port of the digital video recorder or remote workstation, a speaker and a microphone of the Internet phone are interfaced with the digital video recorder or remote workstation through a USB sound card of Windows or Linux system such that audio signals are transmitted through VoIP, and operations of pushing key pad buttons and lifting the handset of the Internet phone are interfaced to the digital video recorder through an application interface.

2. The digital video recorder having an Internet phone as claimed in claim 1, wherein, when a sensor connected to the digital video recorder senses an emergency situation to notify the remote workstation of an alarm event, the operator of the remote workstation immediately connects with the IP address of the digital video recorder by lifting the handset of the Internet phone of the remote workstation to call the Internet phone of the digital video recorder, so as to communication with the operator of the digital video recorder via VoIP.

3. The digital video recorder having an Internet phone as claimed in claim 1, wherein, when a sensor connected to the digital video recorder senses an emergency situation to, notify the remote workstation of an alarm event, the operator of the digital video recorder immediately connects with the IP address of the remote workstation by lifting the handset of the internet phone of the digital video recorder to call the Internet phone of the remote workstation so as to communicate with the remote workstation via VoIP.

4. The digital video recorder having an Internet phone as claimed in claim 1, wherein, when the operator of the digital video recorder lifts the handset of the Internet phone of the digital video recorder, a directory of addresses of digital video recorders connectable with the digital video recorder through a network or the Internet or a separate IP input window is displayed on the monitor of the digital video recorder, and the operator selects a desired address or directly inputs a desired IP address to call the Internet phone of the digital video recorder corresponding to the selected address or IP address so as to communicate with the selected digital video recorder through VoIP.

5. A method of connecting Internet phones respectively connected to USB ports of digital video recorders to an Internet phone connected to a USB port of a remote workstation connectable with the digital video recorders through a network or the Internet, comprising:
a step (a) in which, when events are generated in the digital video recorders, the remote workstation is automatically notified of the events and stores identification information of the digital video recorders, such as IP addresses; and
a step (b) in which, in the case that there is only one event that has been recently notified, the operator of the remote workstation immediately calls the Internet phone of a corresponding digital video recorder to communicate with it through VoIP by lifting the handset of the Internet phone connected to the remote workstation and, when there is a plurality of events that have been recently notified, the events are displayed in the order of time and the operator of the remote workstation selects one of the events to call the Internet phone of the digital video recorder corresponding to the selected event so as to communicate with it through VoIP.

6. A method of connecting Internet phones respectively connected to USB ports of a plurality of digital video recorders that are remotely separated from one another but connectable through a network or the Internet to allow the digital video recorders to communicate with one another through VoIP, comprising:
a step in which, when the operator of an originating digital video recorder lifts the handset of the Internet phone connected to the originating digital video recorder, an address directory or an IP address input window is displayed on the monitor of the originating digital video recorder and the operator of the originating digital video recorder selects a desired address or directly inputs a desired IP address; and
a step in which the Internet phone of a receiving digital video recorder corresponding to the selected address or IP address rings and the operator of the receiving digital video recorder lifts the handset of the Internet phone of the receiving digital video recorder to communicate with the originating digital video recorder via VoIP.

7. The method as claimed in claim 5, wherein the step (b) comprises a step of, when there is no event notified for a predetermined period of time after the remote workstation is notified of the events, considering it as a normal situation having no event and displaying an address directory and IP address window to allow the operator of the digital video recorder or remote workstation to select a desired address or IP address instead of calling the selected address or IP address when the operator lifts the handset of the Internet phone.
